# EUROPÄISCHE PATENTSCHRIFT

(11) **EP 0 441 283 B1**
(45) Veröffentlichungstag und Bekanntmachung des Hinweises auf die Patenterteilung: **04.01.1995**
(21) Anmeldenummer: 91101438.9
(22) Anmeldetag: 04.02.1991
(51) Int. Cl.: F16K 27/06

(54) **Kükenhahn für abrasive Medien**
Tap cock for abrasive fluids
Robinet à tournant pour fluides abrasifs

(30) Priorität: 07.02.1990 DE 4003592
(43) Veröffentlichungstag der Anmeldung: 14.08.1991
(73) Patentinhaber: Hartmann & Braun Aktiengesellschaft, 60484 Frankfurt am Main (DE)
(72) Erfinder: Herres, Karl, W-3062 Bückeburg-Scheie (DE)

(56) Entgegenhaltungen:
- DE-A- 3 642 872
- DE-C- 277 614
- DE-C- 567 039

## Beschreibung

Die Erfindung betrifft einen Kükenhahn für abrasive Medien gemäß dem Oberbegriff des Anspruchs 1.

Ein derartiger Kükenhahn ist aus der DE-OS 36 42 872 bekannt. Das Hahngehäuse des Kükenhahns besteht aus einem Außengehäuse und einer in dem Außengehäuse gehaltenen Auskleidung. Das Außengehäuse des Kükenhahns besteht aus mehreren miteinander verbundenen Teilen, die aus Grauguß, einem Material relativ hoher mechanischer Festigkeit aber geringer Abriebsbeständigkeit, hergestellt sind. Die in dem Außengehäuse gehaltene Auskleidung besteht aus mehreren ineinander gesteckten Teilen, die aus Keramik, einem Material geringer Zug- und Biegefestigkeit aber hoher Abrieb- und Korrosionsbeständigkeit, hergestellt sind. Alle Teile der Auskleidung stützen sich an dem Außengehäuse ab. Sie werden daher nur auf Druck beansprucht. Das Hahnküken besteht ebenfalls aus Keramik; es ist in einer, von einem Teil der Auskleidung gebildeten Buchse, drehbar gelagert. Dieses Teil bildet das zentrale Teil der Auskleidung. Auf seiner Außenseite ist es mit Ausnehmungen versehen, in die die zu den Anschlüssen des Kükenhahns führenden Anschlußstücke gesteckt werden. Erst nach dem Einstecken der Anschlußstücke ist das zentrale Teil der Auskleidung gegen eine Verdrehung gegenüber dem Außengehäuse gesichert. Das zentrale Teil der Auskleidung weist unterschiedliche Wandstärken auf, die eine Optimierung der Auskleidung im Hinblick auf sprungartige Temperaturänderungen verhindern. Werden Keramikteile als Auskleidung eines Ventils verwendet, besteht besonders bei einer sprungartigen Änderung der Temperatur die Gefahr von Rißbildungen in Keramikteilen mit unterschiedlicher Wandstärke. Aufgrund der geringen Elastizität von Keramikteilen führt eine ungleichmäßige Erwärmung der Keramikteile zu einem Rißfortschritt der in den Keramikteilen immer vorhandenen "Rißkeime". Dazu kommt, daß die Fertigung des zentralen Teils der Auskleidung aufgrund der komplizierten Formgebung sehr aufwendig ist.

Der Erfindung liegt daher die Aufgabe zugrunde, einen Kükenhahn der eingangs genannten Art zu schaffen, bei dem der Fertigungsaufwand minimiert wird und der eine Optimierung der Wandstärke der Auskleidung im Hinblick auf sprungartige Temperaturänderungen des durch den Kükenhahn fließenden Mediums erlaubt.

Diese Aufgabe wird erfindungsgemäß durch die im Kennzeichen des Patentanspruchs angegebenen Merkmale gelöst. Temperaturbedingte Formänderungen sind bei dem erfindungsgemäßen Kükenhahn so gering, daß die Keramikteile nicht durch äußere Kräfte belastet werden. Falls erforderlich, können die Keramikteile auf einfache Weise ausgetauscht werden. Für eine Demontage des Kükenrohres braucht der Kükenhahn nicht aus dem Leitungszug ausgebaut zu werden.

Ein Ausführungsbeispiel der Erfindung wird anhand der nachfolgenden Zeichnungen näher erläutert. Es zeigen
- Figur 1: eine Seitenansicht des erfindungsgemäßen Kükenhahnes, dessen eine Hälfte als Schnitt dargestellt ist, wobei einzelne Teile des Kükenhahnes in der Art einer Explosionszeichnung dargestellt sind, und
- Figur 2: einen waagerechten Schnitt durch den erfindungsgemäßen Kükenhahn entlang der Linie A - B in der Figur 1.

Gleiche Bauteile sind mit den gleichen Bezugszeichen versehen.

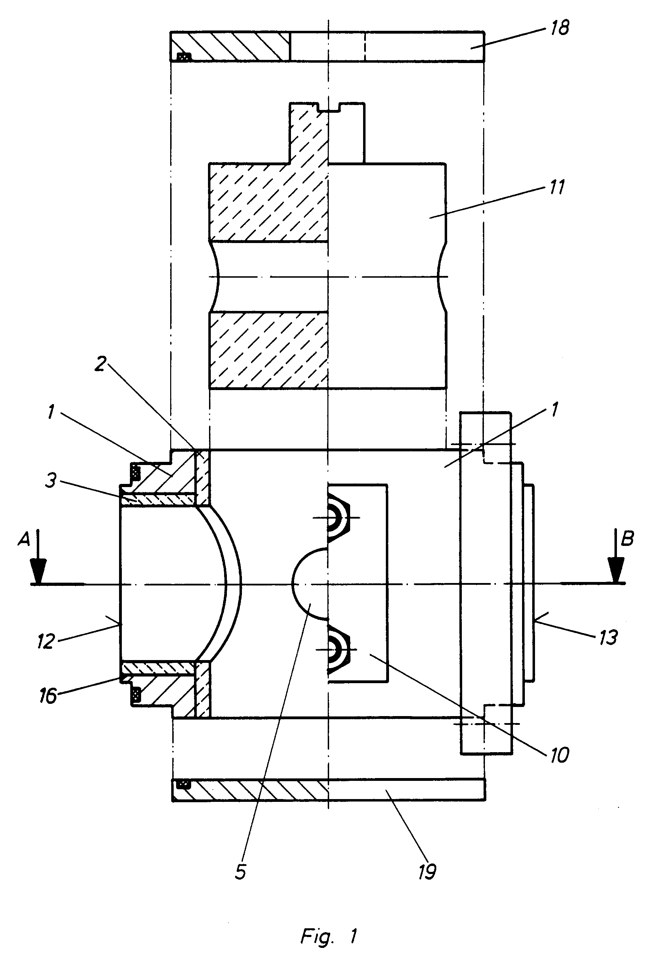

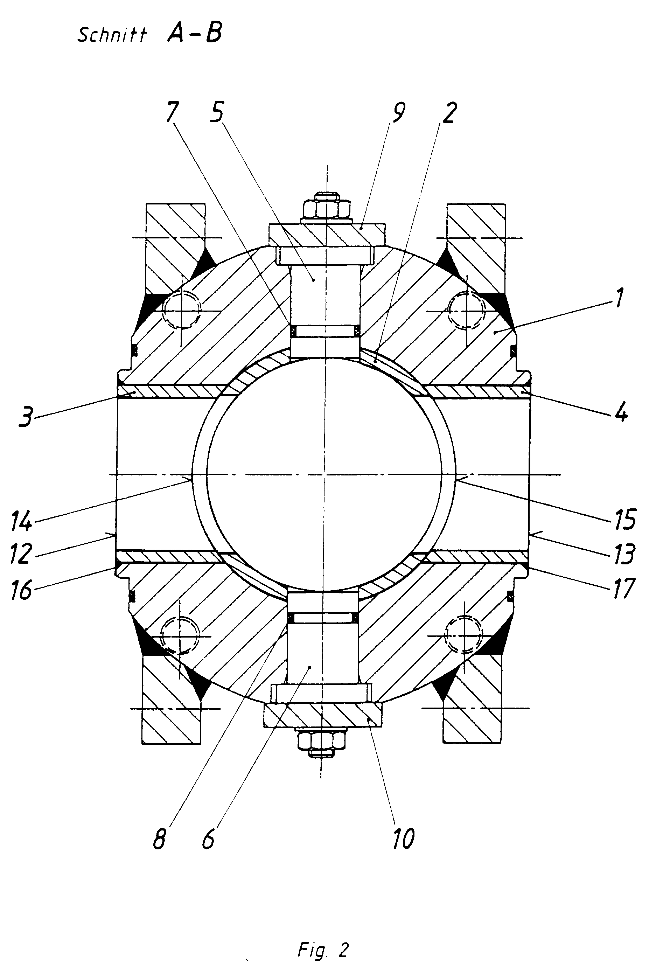

Die Figuren 1 und 2 zeigen verschiedene Ansichten eines Kükenhahnes nach der Erfindung. Die linke Hälfte der Figur 1 ist als senkrechter Schnitt durch den Kükenhahn dargestellt und die rechte Hälfte der Figur 1 als Seitenansicht. Das Hahnküken und die Platten, die die Öffnungen für den Einbau des Kükenrohres in das Außengehäuse verschließen, sind dabei in der Art einer Explosionszeichnung dargestellt. Das Hahngehäuse besteht aus einem aus austenitischem Stahl hergestellten massiven Außengehäuse 1 und aus einer in dem Außengehäuse 1 gehaltenen Auskleidung, die aus drei Keramikrohren, dem Kükenrohr 2 und den Anschlußrohren 3 und 4, gebildet ist. Das Kükenrohr 2 ist durch zwei aus Keramik hergestellte Bolzen 5 und 6 gegen Verdrehung gegenüber dem Außengehäuse 1 gesichert. Die Bolzen 5 und 6 erstrecken sich von dem Außengehäuse 1 bis in die Wand des Kükenrohres 2. Dichtungen 7 und 8 dichten die Bolzen 5 bzw. 6 gegen das Außengehäuse 1 ab. Platten 9 und 10, die mit dem Außengehäuse 1 verschraubt sind, verschließen das Außengehäuse und halten die Bolzen 5 und 6 an ihrem Platz. In dem Kükenrohr 2 ist das Hahnküken 11 drehbar gelagert. Die Anschlußrohre 3 und 4 verbinden die Anschlüsse 12 und 13 mit dem Kükenrohr 2. Die Anschlußrohre 3 und 4 weisen an ihrer einen Stirnseite eine an die zylinderförmige Wölbung der Außenfläche des Kükenrohres 2 angepaßte Ausnehmung 14 bzw. 15 auf. Diese Ausnehmungen lassen sich durch einen einfachen Schleifvorgang herstellen.

Im folgenden ist der Zusammenbau des erfindungsgemäßen Kükenhahnes beschrieben. In das Außengehäuse 1 wird das Kükenrohr 2 eingeschoben und so ausgerichtet, daß die Bohrungen für die Aufnahme der Bolzen 5 und 6 fluchten. Die Bolzen 5 und 6 werden eingesetzt und das Außengehäuse 1 durch die Platten 9 und 10 verschlossen. Die Anschlußrohre 3 und 4 werden von den Anschlüssen 12 bzw. 13 in das Außengehäuse 1 eingeschoben und durch Silikonmasse 16 bzw. 17 für den Transport gesichert. Nach dem Einbau des erfindungsgemäßen Kükenhahnes in einen Leitungszug sind die Anschlußrohre 3 und 4 durch die an die Anschlüsse 12 und 13 angeschlosssenen Rohrleitungen gesichert. Das Hahnküken 11 wird in das Kükenrohr 2 eingeschoben, und die Platten 18 und 19 werden mit dem Außengehäuse 1 verschraubt. Die Platten 18 und 19 veschließen das Außengehäuse 1 und verhindern eine axiale Verschiebung des Hahnkükens 11.

Durch den massiven Aufbau des Außengehäuses 1 werden Eigenspannungen der Rohrleitungen von der Keramikauskleidung ferngehalten. Die Wandstärke der die Auskleidung des Außengehäuses bildenden Keramikrohre ist überall gleich groß. Die Wandstärke kann daher in einfacher Weise auf Thermoschockfestigkeit optimiert werden.

## Patentansprüche

1. Kükenhahn für abrasive Medien,
- dessen Hahngehäuse aus einem Außengehäuse aus einem Material relativ hoher mechanischer Festigkeit und aus einer in dem Außengehäuse gehaltenen Auskleidung aus Keramik besteht, wobei alle Teile der Auskleidung von dem Außengehäuse abgestützt sind, und wobei die Auskleidung aus einer Kükenbuchse, in der das Hahnküken drehbar gelagert ist, und aus Anschlußrohren, die die einzelnen Anschlüsse des Kükenhahnes mit der Kükenbuchse verbinden, besteht und
- dessen Hahnküken aus Keramik besteht,
dadurch gekennzeichnet,
- daß die Kükenbuchse aus einem Kükenrohr (2) besteht,
- daß die Anschlußrohre (3, 4) an der einen Stirnseite eine an die zylinderförmige Wölbung der Außenfläche des Kükenrohres (2) angepaßte Ausnehmung (14, 15) aufweisen,
- daß die Wandstärke der die Auskleidung des Außengehäuses bildenden Keramikrohre überall gleich groß ist und
- daß das Kükenrohr (2) durch mindestens einen Bolzen (5, 6) aus Keramik, der sich von dem Außengehäuse (1) bis in die Wand des Kükenrohres (2) erstreckt, gegen Verdrehung gesichert ist.

## Claims

1. A tap cock for abrasive media,
- the housing of which cock consists of an outer housing made of a material of relatively high mechanical strength and of a ceramic lining held in the outer housing, all the parts of the lining being supported by the outer housing, and in which the lining consists of a cock bushing in which the cock plug is rotationally mounted, and of connecting pipes which connect the individual connections of the tap cock to the cock bushing, and
- the cock plug of which is made of ceramic,
characterised in that
- the cock bushing consists of a cock pipe (2),
- that the connecting pipes (3, 4) have on one end face a recess (14, 15) adapted to the cylindrical curve of the outer surface of the cock pipe (2),
- that the wall thickness of the ceramic pipes forming the lining of the outer housing is the same size throughout, and
- that the cock pipe (2) is secured against twisting by at least one ceramic pin (5, 6), which extends from the outer housing (1) into the wall of the cock pipe (2).

## Revendications

1. Robinet à boisseau pour des fluides abrasifs,
- dont le boîtier de robinet est constitué d'un boîtier externe en un matériau présentant une résistance mécanique relativement élevée et d'un revêtement en céramique maintenu dans le boîtier externe, toutes les parties du revêtement étant supportées par le boîtier externe, et le revêtement étant constitué d'une douille de boisseau, dans laquelle est monté de façon rotative le boisseau, et de tubes de raccordement qui relient les raccordements individuels du robinet à boisseau à la douille à boisseau, et
- dont le robinet à boisseau est réalisé en céramique,
caractérisé
- en ce que la douille de boisseau est constituée d'un tube de boisseau (2),
- en ce que les tubes de raccordement (3,4) présentent à l'une des faces frontales un évidement (14,15) adapté à la courbure cylindrique de la surface externe du tube de boisseau (2),
- en ce que l'épaisseur des parois des tubes en céramique formant le revêtement du boîtier externe est partout identique, et
- en ce que le tube de boisseau (2) est assuré contre la torsion par au moins un boulon (5,6) en céramique, qui s'étend du boîtier externe (1) jusque dans la paroi du tube de boisseau (2).
